# DEMANDE DE BREVET EUROPEEN

(11) **EP 1 657 115 A1**
(43) Date de publication de la demande: **17.05.2006**
(21) Numéro de dépôt: 05300914.8
(22) Date de dépôt: 10.11.2005
(51) Int. Cl.: B60R 13/08, B60R 21/02

(54) **Cloison insonorisante pour espace intérieur, notamment de véhicule automobile**

(30) Priorité: 16.11.2004 FR 0452632
(71) Demandeur: Peugeot Citroen Automobiles SA, 78140 Vélizy Villacoublay (FR)
(72) Inventeur: Chamard, Jean-Christophe, 28170 Tremblay les Villages (FR); Auffray, Bertrand, 78330 Fontenay le Fleury (FR); Jund, Arnaud, 78640 St Germaine de la Grange (FR); Lagache, Jean-Marie, 94240 L Hay les Roses (FR)
(74) Mandataire: Fernandez, Francis Lionel

(57) **Abrégé**

Cloison (21) pour espace intérieur, notamment de véhicule automobile utilitaire, cet espace intérieur comprenant une cabine et un espace de chargement séparé de la cabine par la cloison (21) s'étendant verticalement et transversalement, caractérisée en ce que la cloison (21) comprend un panneau fixe sur lequel est disposé au moins un résonateur acoustique (26) de type résonateur de Helmholtz ou guide d'onde, débouchant côté cabine.

## Description

L'invention concerne en général l'aménagement d'espaces intérieurs, notamment de véhicules automobiles utilitaires.

Plus précisément, la présente invention concerne une cloison pour espace intérieur, notamment de véhicule automobile utilitaire, cet espace intérieur comprenant une cabine et un espace de chargement séparé de la cabine par cette cloison, la cloison comprenant un panneau fixe venant fermer l'espace de chargement.

Des cloisons de ce type sont bien connues de l'art antérieur. Certaines de ces parois sont totalement pleines ou bien encore comportent des parties vitrées plus ou moins importantes.

Les équipements intérieurs à une cabine de véhicule doivent par ailleurs répondre à des critères de conception de plus en plus sévères tant d'un point de vue de leur tenue aux efforts mécaniques (comportement lors d'un choc par exemple) que d'un point de vue acoustique tout en étant le plus léger et le moins encombrant possible.

La contribution des éléments comme les pièces dites de garnissage, les tapis, les moquettes, tout type de revêtement textile, les mousses des sièges, apportent un amortissement au niveau de bruit à l'intérieur de l'habitacle par leur caractéristique d'absorption. Cependant cette absorption acoustique n'est efficace qu'au delà d'une certaine fréquence (~ 400Hz)

Or une source importante de bruit dans un habitacle automobile est de type basse fréquence, c'est à dire inférieure à 200Hz, car produit par les moteurs thermiques en général et diesels en particulier.

De plus, l'introduction sur les utilitaires d'une cloison, juste derrière la rangée de sièges, afin de séparer la zone de chargement de l'habitacle modifie la géométrie de la cavité habitacle et à tendance à dégrader à certaines basses fréquences, le niveau de bruit au niveau des oreilles des occupants.

La présente invention se propose de réaliser une conception novatrice du panneau formant une cloison entre la cabine et l'espace de chargement, pour l'utiliser en tant que moyens de réductions des bruits et ce, sans quasiment de modifications et de surcoûts.

Dans un mode particulier de réalisation, on intègre à la cloison de séparation de l'habitacle et de la zone de chargement au moins un dispositif de type tube quart d'onde acoustique, débouchant dans l'habitacle, permettant de diminuer le niveau de bruit autour de certaines fréquences caractéristiques. Ainsi, le niveau de bruit à l'intérieur de l'habitacle perçu autour de la fréquence la plus sensible (ou des fréquences les plus sensibles) sera réduit.

La cloison selon l'invention est plus particulièrement destiné au cloisonnement de l'espace intérieur d'un véhicule automobile de type notamment utilitaire, cet espace intérieur comprenant une cabine et un espace de chargement séparé de la cabine par la cloison s'étendant verticalement et transversalement.

Selon l'invention, la cloison est caractérisée en ce qu'elle comprend un panneau fixe sur lequel est disposé au moins un résonateur acoustique de type résonateur de Helmholtz ou guide d'onde.

Selon une autre caractéristique de la cloison objet de la présente invention, le panneau présente au moins une cavité formant résonateur qui communique sur la face de la cloison tournée vers la cabine par un au moins un orifice approprié.

L'invention consiste à utiliser la conception même de la cloison pour y intégrer des résonateurs acoustiques comme des résonateurs de Helmholtz (au moins un) et/ou des tubes (au moins un) ¼ d'onde, et/ou des résonateurs acoustiques de différentes formes.

Dans un mode particulier de réalisation, on intègre à la cloison de séparation de l'habitacle et de la zone de chargement au moins un dispositif de type tube quart d'onde acoustique, débouchant dans l'habitacle, permettant de diminuer le niveau de bruit autour de certaines fréquences caractéristiques. Ainsi, le niveau de bruit à l'intérieur de l'habitacle perçu autour de la fréquence la plus sensible (ou des fréquences les plus sensibles) sera réduit.

Selon une autre caractéristique de la cloison objet de la présente invention, le résonateur acoustique est intégré à des moyens de rigidification du panneau formant la cloison.

Selon une autre caractéristique de la cloison objet de la présente invention, le panneau comporte au moins une rainure de rigidification, cette rainure étant fermée par une plaque appropriée de façon à définir une cavité résonatrice.

Selon une autre caractéristique de la cloison objet de la présente invention, la rainure est formée par emboutissage du panneau.

Selon une autre caractéristique de la cloison objet de la présente invention, un caisson rapporté est fixé sur le panneau, ce caisson logeant la cavité résonatrice.

Selon une autre caractéristique de la cloison objet de la présente invention, le caisson est fermé et vient se loger dans une ouverture correspondante ménagée à travers le panneau.

Selon une autre caractéristique de la cloison objet de la présente invention, le caisson est ouvert et vient se fixer contre ledit panneau, la paroi dudit panneau fermant alors ledit caisson.

Selon une autre caractéristique de la cloison objet de la présente invention, l'ouverture de la cavité résonatrice est recouverte par un revêtement de garnissage poreux.

Selon une autre caractéristique de la cloison objet de la présente invention, les dimensions de la cavité ménagée dans le panneau sont adaptées à la fréquence acoustique au moyen de cloison(s) rapportée(s).

D'autres caractéristiques et avantages de l'invention ressortiront clairement de la description de plusieurs modes de réalisation qui en sont donnés ci-dessous, à titre indicatif et nullement limitatif, en référence aux figures annexées, parmi lesquelles :
- la figure 1a est une vue en perspective, côté cabine, d'un premier mode de réalisation d'une cloison de séparation entre l'espace de chargement et la cabine d'un véhicule automobile, destinée à formée une cloison insonorisante selon l'invention ;
- la figure 1b est une vue similaire à la figure 1a, côté espace de chargement ;
- les figures 2a et 2b sont des vues similaires aux figures 1a et 1b présentant la cloison insonorisante selon l'invention ;
- la figure 3 est une vue similaire à la figure 1b, illustrant un second mode de réalisation de l'invention ;
- la figure 4 est une vue similaire à la figure 1a, illustrant un troisième mode de réalisation de l'invention ;
- la figure 5 est une vue similaire à la figure 1b, illustrant un quatrième mode de réalisation de l'invention ;
- les figures 6a, 6b et 6c présentent différentes formes de cavités résonatrices pouvant équiper une cloison résonatrice selon l'invention.

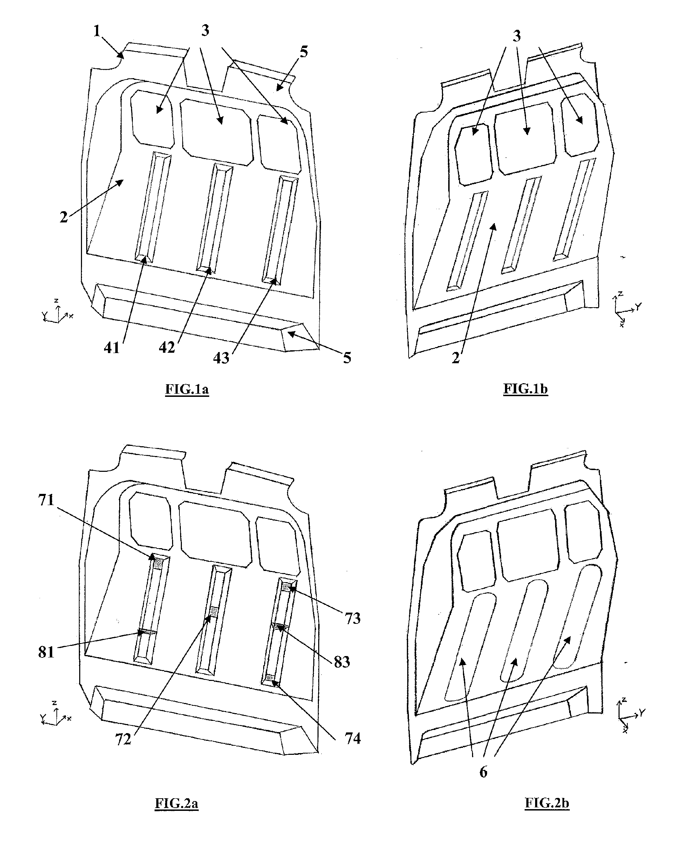

Les figures 1a, 1b, 2a, 3b, présentent une cloison 1 qui est destinée à l'aménagement d'un espace intérieur d'un véhicule automobile non figuré comprenant une cabine et un espace de chargement, cet espace de chargement étant séparé de la cabine par cette cloison 1.

Ce véhicule automobile est plus particulièrement du type véhicule utilitaire, dont la cabine, située à l'avant comprend classiquement un siège conducteur et un siège passager disposé latéralement par rapport au siège conducteur. L'espace de chargement est situé à l'arrière du véhicule, derrière les sièges conducteur et passager. La cabine peut comprendre deux sièges passagers situés côte à côte, ou deux rangées de sièges passagers.

Bien évidemment ce type de cloison peut également s'appliquer à un véhicule de type berline, la cabine étant alors constituée par l'habitacle du véhicule.

L'avant et l'arrière sont définis relativement au sens de déplacement normal du véhicule.

Selon le mode de réalisation représenté sur les figures 1a et 1b, la cloison modulable 1 est destinée à être disposée sensiblement verticalement et transversalement au véhicule. La cloison 1 est conformée aux dimensions du véhicule qu'elle équipe pour épouser la forme de la section transversale de l'espace intérieur du véhicule et ainsi constituer une séparation complète entre la cabine et l'espace de chargement.

La cloison 1 peut également être verticale dans une partie supérieure, et comprendre une partie inférieure légèrement inclinée vers l'avant du véhicule pour épouser la forme des dossiers des sièges conducteur et passagers.

Cette cloison 1 comprend de manière connue un panneau fixe 2 en tôle à travers lequel peut être ménagé des ouvertures vitrées 3 ainsi qu'éventuellement une ou plusieurs ouvertures destinées à faire communiquer la zone de chargement et la cabine et qui coopèrent avec des moyens de fermeture.

Dans le mode de réalisation illustré, la cloison qui sépare l'habitacle du volume de chargement comporte, par ailleurs, différents « emboutis » 4 et 5 aménagés dans le panneau 2 qui servent à augmenter les inerties de ce dernier et renforcent ainsi sa tenue mécanique en particulier pour les chocs de bagages sur cette cloison lors d'une violente décélération ou d'un choc frontal. Ces emboutis sont aussi appelés nervures. Sur les figures, on a plus particulièrement figurées des nervures verticales 4 et une nervure horizontale 5. Selon le mode de réalisation figuré, les emboutis font saillie à l'intérieur de la cabine, ils pourraient bien évidemment sans sortir du cadre de la présente invention faire saillie du côté de l'espace de chargement.

Pour former une cloison insonorisante selon l'invention, on transforme les nervures 4 ou 5 en résonateurs de Helmholtz ou encore guides d'onde (λ/2, λ/3 ou encore λ/4 encore appelé guide quart d'onde, où λ est le rapport entre la célérité du son dans le milieu (ici l'air) et la fréquence à laquelle on souhaite avoir l'effet) débouchant dans la cabine.

On rappelle qu'un résonateur de Helmholtz est constitué par une cavité qui communique avec l'extérieur par un orifice étroit. Lorsqu'une pression acoustique agit sur ledit orifice, elle tend à faire vibrer la masse d'air contenue dans la cavité à une certaine fréquence qui est fonction des dimensions de cette cavité. Le résonateur de Helmholtz est utilisé pour atténuer les oscillations basses fréquences ; son efficacité est maximale autour de sa fréquence de résonance acoustique ainsi que de ces harmoniques.

Pour réaliser de tels guides d'onde, on ferme donc par exemple tout ou partie des nervures verticales de forme parallélépipédiques 41, 42 et 43 ménagées dans le panneau 2, par application de plaques planes de fermeture 6 sur la face orientée côté espace de chargement du panneau 2 et on perce le panneau 2 au droit des nervures pour réaliser au moins un orifice de communication entre la cabine et chaque cavité ainsi créée, orifices référencés respectivement 71, 72, 73 et 74.

La fermeture des nervures forme ainsi des caissons creux s'étendant en saillie à la surface du panneau 2, caissons qui logent les cavités résonatrices assurant les propriétés insonorisantes selon l'invention.

Les plaques de fermeture 6 peuvent être métalliques, par exemple en acier. Auquel cas pour une plaque de fermeture en acier on peut assembler celle-ci sur la cloison 1 par points de soudure. Il est préférable de disposer entre les plaques 6 et la cloison 1 un mastic de calage ou joint d'étanchéité car pour jouer au mieux son rôle acoustique le volume ainsi constitué ne doit communiquer avec l'habitacle que par le ou les orifices prévus pour cela.

La plaque de séparation peut aussi être dans d'autre matériau comme du « plastique ». L'assemblage peut être réalisé par collage, rivetage, vissage ...

Les orifices de communication percés à travers les nervures peuvent se trouver à l'une et/ou l'autre des extrémités axiales, cf. les orifices 71, 73 et 74, ou encore à un autre endroit de la nervure, cf. l'orifice 72.

On peut également ajuster les caractéristiques acoustiques des résonateurs en ajustant les dimensions et notamment la longueur des cavités résonatrices en disposant à l'intérieur des nervures une tôle de séparation et ce, avant de les fermer par les plaques 6.

Ces tôles de séparation, tôle 81 pour la nervure 41 et tôle 83 pour la nervure 43, permettent de faire en sorte que l'on constitue des volumes fermés de dimensions adaptées, notamment aux sources de bruit spécifique d'un véhicule et notamment son moteur, tout en utilisant un panneau de conception standard utilisable pour différentes motorisations.

On peut ainsi constituer des guides d'onde de différentes longueurs qui vont provoquer des atténuations du bruit aux oreilles des occupants autour de différentes fréquences.

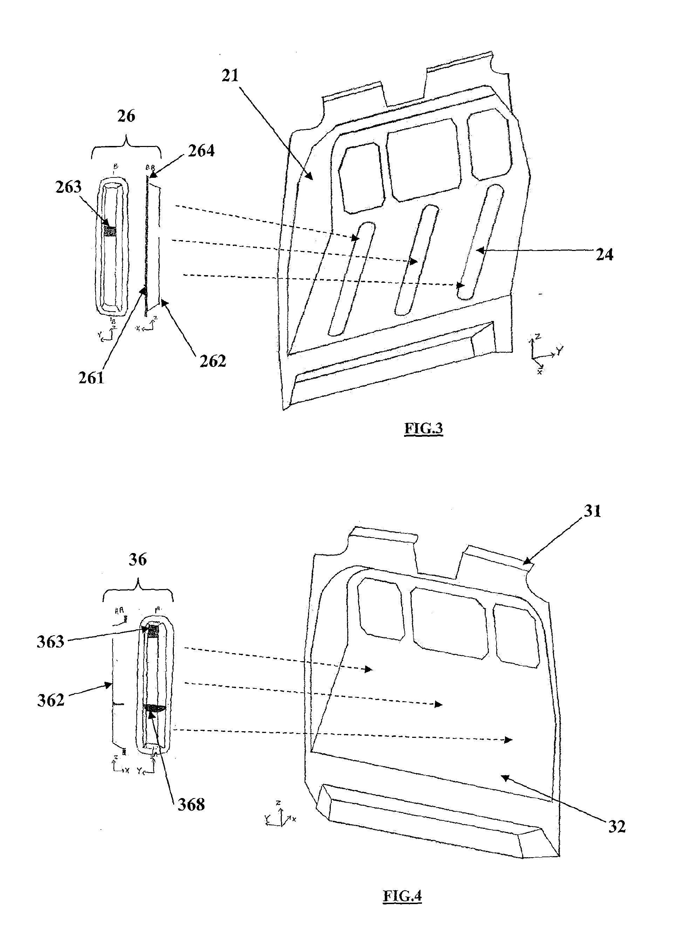

Selon un autre mode de réalisation représenté à la figure 3, les moyens résonateurs équipant la cloison 21 séparant la cabine de la zone de chargement sont formées par un caisson indépendant 26 que l'on vient rapporter sur la cloison 21, et non plus par une nervure préexistante sur la cloison 21.

Le caisson fermé 26 est formé schématiquement par une plaque de fond plane 261 venant fermée une tôle emboutie concave de forme sensiblement parallélépipédique 262. La plaque 261 présente un rebord périphérique 264 autour de ladite tôle 262. Ce caisson 26 définit ainsi une cavité intérieure résonatrice qui débouche à l'extérieur par un orifice 263 ménagé à travers la paroi de la tôle 262.

Ce caisson 26 est fixé sur la cloison 21 de la façon suivante. La cloison 26 est percée d'une ouverture oblongue 24 correspondante aux dimensions de la tôle 262, ce qui permet d'emboîter le dispositif 26 sur la cloison 21 à travers l'ouverture 24 par le côté zone de chargement, jusqu'à venir faire appuyer le rebord 264 contre la cloison 21, la tôle 262 s'étendant alors en saillie dans la cabine.

Selon ce mode de réalisation, la cloison 21 est « plane » dans sa zone centrale aucune nervure n'étant formée par emboutissage directement sur la cloison. Les nervures 26 sont ici réalisées « à part » sous la forme de caissons 26 indépendants puis rendues solidaires de la cloison 21 par collage ou soudage des rebords 264 après insertion des caissons dans des ouvertures correspondantes ménagées à travers la cloison 21.

Pour ajuster les caractéristiques acoustiques du résonateur 26, on peut jouer sur sa longueur ou bien encore disposer à l'intérieur une cloison.

Dans la variante de réalisation représentée à la figure 4 également relatif à une cavité résonatrice rapportée, on peut prévoir un caisson 36 faisant saillie dans la cabine et formé par une simple tôle concave de forme sensiblement parallélépipédique 362 fixée à même le panneau 32 formant la cloison séparatrice 31, par soudure ou collage d'un rebord périphérique adapté.

Un orifice 363 est alors ménagé à travers cette tôle rapportée 362 pour faire déboucher la cavité délimitée entre la tôle 362 et la cloison 31, ainsi formée dans la cabine.

Pour ajuster les caractéristiques acoustiques du résonateur 36, on peut jouer sur sa longueur ou bien encore disposer à l'intérieur une cloison 368.

A la figure 5, on a représenté en variante de réalisation un caisson résonateur 56 formé par une tôle rapportée par soudure ou collage, de type 562 venant se fixer sur le panneau 52 formant la cloison plane 51 et faisant saillie à l'intérieur de l'espace de chargement, un orifice 563 est alors ménagé à travers cette cloison 51 au droit de la tôle rapportée 562 pour faire déboucher la cavité ainsi formée dans la cabine.

Pour ajuster les caractéristiques acoustiques du résonateur 56, on peut jouer sur sa longueur ou bien encore disposer à l'intérieur une cloison 568.

Dans toutes ces variantes de volumes rapportés, les volumes fermés alors créés constituent à la fois des « résonateurs acoustiques » et des raidisseurs de cloison. On remarquera que la position des orifices et les dimensions des dispositifs dépendent de la fréquence (ou des fréquences) autour de laquelle (lesquelles) on veut obtenir une diminution du niveau sonore. La localisation des orifices est pilotée par l'allure du champ de pression acoustique dans l'habitacle à la fréquence considérée. Le dimensionnement est quand à lui piloté par le volume fermé constitué à l'intérieur du raidisseur et la taille de l'orifice en communication avec l'habitacle.

Pour d'obtenir le volume souhaité, il suffit d'intégrer une séparation dans le renfort (par exemple un bout de tôle) afin de réaliser le fond du dispositif. De même, on peut partitionner le renfort et ainsi créer différentes cavité si on souhaite multiplier les dispositifs.

Il va de soi que ces raidisseurs/résonateurs peuvent être disposés n'importe où sur la cloison et dans n'importe quelle direction :
Les orifices permettant de mettre en relation le volume fermé de la cavité et l'habitacle peuvent être soit complément ouvert, soit recouvert par un tissus ou un garnissage si celui-ci est « poreux » au passage de l'air ou bien par une plaque perforée ou micro-perforée par exemple.

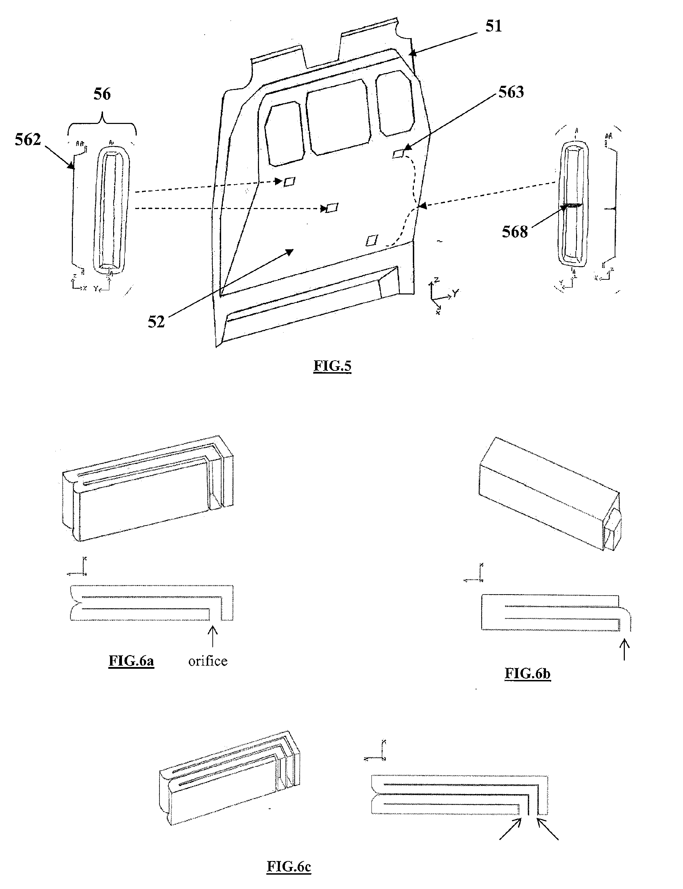

Pour des raisons d'encombrement, les dispositifs peuvent être replier sur eux-mêmes comme illustrés sur les figures 6a à 6c.

La combinaison de plusieurs volumes fermés et de plusieurs orifices permet d'obtenir des effets de réduction du bruit autour de plusieurs fréquences d'intérêt.

Par exemple, que des cavités résonatrices du type quart d'onde λ/4 de longueurs respectives 770mm et 840mm atténuaient les bruits perçus aux fréquences de 104Hz et 114Hz.

Bien évidemment la présente invention n'est pas limitée aux modes de réalisation qui ont été présentés qu'à titre d'exemples illustratifs de la présente invention.

Pour modifier le comportement acoustique en basses fréquences d'une cavité, on peut introduire au moins un des dispositifs suivant : tube quart d'onde, résonateur d'Helmholtz, tube ouvert-ouvert, etc.... (liste non exhaustive). En fonction des caractéristiques géométriques des dispositifs on peut autour de certaines fréquences réduire le niveau de bruits en certains lieux de la cavité.

## Revendications

1. Cloison (1 ;21 ;31 ;51) pour espace intérieur, notamment de véhicule automobile utilitaire, cet espace intérieur comprenant une cabine et un espace de chargement séparé de la cabine par ladite cloison s'étendant verticalement et transversalement, **caractérisée en ce que** ladite cloison comprend un panneau fixe (2 ;22 ;32 ;52) sur lequel est disposé au moins un résonateur acoustique (3,6 ;26 ;36 ;56) de type résonateur de Helmholtz ou guide d'onde.

2. Cloison suivant la revendication 1, **caractérisée en ce que** dans ledit panneau (2 ;22 ;32 ;52) présente au moins une cavité formant résonateur qui communique sur la face de la cloison tournée vers la cabine par au moins un orifice approprié (71,72,73,74 ;263 ;363,563).

3. Cloison suivant la revendication 2, **caractérisée en ce que** le panneau fixe (2 ;22 ;32 ;52) coopère avec des moyens de rigidification (3;26 ;36 ;56) et **en ce que** ledit résonateur acoustique est intégré auxdits moyens de rigidification.

4. Cloison suivant la revendication 3, **caractérisée en ce que** ledit panneau comporte au moins une rainure de rigidification (4), ladite rainure étant fermée par une plaque (6) appropriée de façon à définir une cavité résonatrice.

5. Cloison suivant la revendication 4, **caractérisée en ce que** ladite rainure (3) est formée par emboutissage dudit panneau (2).

6. Cloison suivant la revendication 3, **caractérisée en ce qu'**elle présente un caisson rapporté (26 ;36 ;56) venant se fixer sur le panneau fixe (22 ;32 ;52), ledit caisson logeant ladite cavité résonatrice.

7. Cloison suivant la revendication 6, **caractérisée en ce que** ledit caisson est fermé (26) et vient se loger dans une ouverture correspondante (24) ménagée à travers ledit panneau (22).

8. Cloison suivant la revendication 6, **caractérisée en ce que** ledit caisson (26 ;36) est ouvert et vient se fixer contre ledit panneau (32 ;52), la paroi dudit panneau fermant alors ledit caisson.

9. Cloison suivant l'une quelconques des revendications 2 à 9, **caractérisée en ce que** l'ouverture (71,72,73,74 ;263 ;363,563) de ladite cavité résonatrice est recouvert par un revêtement de garnissage poreux.

10. Cloison suivant l'une quelconques des revendications 2 à 9, **caractérisée en ce que** les dimensions de ladite cavité sont adaptées à la fréquence acoustique au moyen d'au moins une cloison interne rapportée (81 ;368, 568).
